# EUROPÄISCHE PATENTANMELDUNG

(11) **EP 0 954 198 A2**
(43) Veröffentlichungstag der Anmeldung: **03.11.1999**
(21) Anmeldenummer: 99101559.5
(22) Anmeldetag: 28.01.1999
(51) Int. Cl.: H04Q 11/04

(54) **Verfahren zur Verbindung von Kommunikationssystemen über eine paketorientierte Datenübertragungsstrecke**

(30) Priorität: 27.04.1998 DE 19818776
(71) Anmelder: SIEMENS AKTIENGESELLSCHAFT, 80333 München (DE)
(72) Erfinder: Hünlich, Klaus, 85467 Neuching (DE); Fraas, Wolfgang, 82515 Wolfratshausen (DE)

(57) **Zusammenfassung**

Für eine Verbindung von Kommunikationssystemen werden zur Datenübermittlung dienende Datenpakete (ATM-Z1, ATM-Z2) in Substruktur-Elemente (SE) untergliedert, wobei eine Zuordnung der Substruktur-Elemente (SE) zu Kanälen, von in den Kommunikationssystemen vorgesehenen Multiplexverbindungen erfolgt.

## Beschreibung

Aus 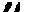 Sonderausgabe telcom report und Siemens-Magazin COM: ISDN im Büro - HICOM", Siemens AG, Berlin und München, 1985, insbesondere der Seiten 50 bis 57, ist ein Kommunikationssystern bekannt, das für einen Anschluß an ein Kommunikationsnetz bzw. für eine Verbindung mit einem weiteren Kommunikationssystem einen Primärmultiplexanschluß - in der Literatur häufig mit S₂ₘ-Schnittstelle bezeichnet - aufweist. Allgemein umfaßt eine S_{2M}-Schnittstelle zum einen 30 Nutzdatenkanäle, welche als ISDN-orientierte B-Kanäle (Integrated Services Digital Network) mit einer Übertragungsrate von 64 kBit/s ausgestaltet sind und zum anderen einen Signalisierungskanal, welcher als ISDN-orientierter D-Kanal mit einer Übertragungsrate von 64 kBit/s ausgestaltet ist.

Somit steht für eine Datenübertragung zwischen zwei Kommunikationssystemen eine Datenübertragungsrate von 2 Mbit/s zur Verfügung. Die Datenübertragungsrate von 2 Mbit/s wird dabei permanent, d.h. unabhängig von der tatsächlich genutzten Übertragungskapazität bereitgestellt. Ungenutzte freie Über-tragungskapazitäten lassen sich nicht anderweitig nutzen.

Durch den zunehmenden Bedarf an einer Übertragung von Video-informationen in der modernen Kommunikationstechnik, wie z.B. Fest- und Bewegtbilder bei Bildtelefonanwendungen steigt die Bedeutung von Übertragungs- und Vermittlungstechniken für hohe und variable Datenübertragungsraten (größer 100 Mbit/s). Ein bekanntes Datenübertragungsverfahren für hohe Datengeschwindigkeiten ist der sogenannte Asynchrone Transfer Modus (ATM). Eine Datenübertragung auf Basis des Asynchronen Transfer Modus ermöglicht derzeit eine variable Übertragungsbitrate von bis zu 622 Mbit/s.

Der vorliegenden Erfindung liegt die Aufgabe zugrunde, ein Verfahren anzugeben, durch welches eine derartige paketorientierte Datenübermittlung zwischen mehreren Kommunikationssystemen realisiert werden kann.

Die Lösung der Aufgabe erfolgt erfindungsgemäß mit den Merkmalen des Patentanspruchs 1.

Zum besseren Verständnis der Funktionsweise einer paketorientierten Datenübermittlung zwischen Kommunikationssystemen, erscheint es erforderlich zunächst noch einmal auf bekannte Prinzipien näher einzugehen.

Bei dem als Asynchronen Transfer Modus (ATM) bekannten Daten-übertragungsverfahren werden für den Datentransport Datenpakete fester Länge, sogenannte ATM-Zellen benutzt. Eine ATM-Zelle setzt sich aus einem, für den Transport einer ATM-Zelle relevante Vermittlungs-Daten enthaltenden, fünf Bytes langem Zellkopf, dem sogenannten 'Header' und einem 48 Bytes langem Nutzdatenfeld, dem sogenannten 'Payload' zusammen.

Eine kommunikationssysteminterne Datenübermittlung z.B. zwischen einem im Kommunikationssystem angeordneten Koppelfeldmodul und einer Netz-Anschlußeinheit erfolgt üblicherweise über sogenannte 'PCM-Highways' gemäß dem TDM-Verfahren (Time Devision Multiplex). Bei einer Datenübermittlung über ein, an der Netz-Anschlußeinheit angeschlossenes ATM-Netz ist eine Umwandlung des kontinuierlichen kommunikationssysteminternen Datenstroms in Datenpakete gemäß dem ATM-Format - in der Literatur häufig auch mit 'ATM-Layer' bezeichnet - notwendig.

Eine Umwandlung des kontinuierlichen, auf dem TDM-Verfahren basierenden Datenstroms auf das ATM-Format erfolgt gemäß der ATM-Anpassungs-Schicht AAL-Typ1 (ATM Adaption Layer). Durch die ATM-Anpassungs-Schicht AAL erfolgt eine Anpassung des 'ATM-Layers' auf die Vermittlungsschicht (Schicht 3) gemäß des OSI-Referenzmodells (Open Systems Interconnection).

Durch die ATM-Anpassungs-Schicht AAL-Typ 1 werden alle 32 in einem, über einen PCM-Highway übermittelten TDM-Rahmen zeitlich aufeinanderfolgenden Kanäle (mit jeweils 1 Byte Nutzdateninformation) in der nachfolgend beschriebenen Weise auf das ATM-Zellen-Format umgesetzt.

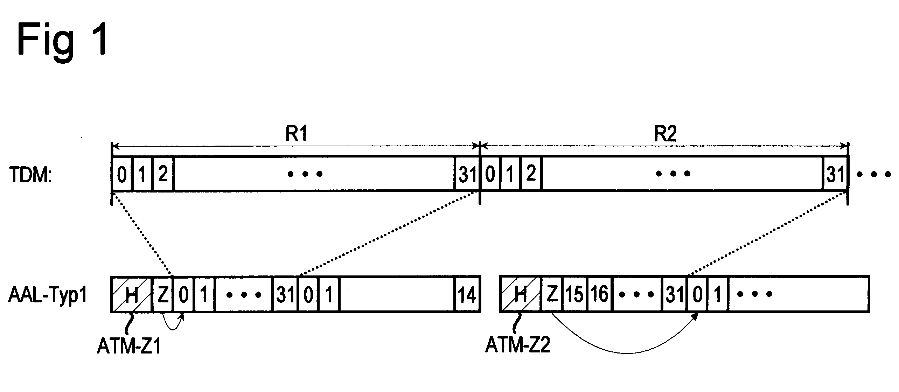

Zusätzlich zum 'Header' wird innerhalb des 'Payload'-Bereiches einer ATM-Zelle das erste Byte als Zeiger verwendet. Dieser Zeiger dient zur Wiederherstellung der Synchronisation zwischen Sender und Empfänger für den Fall, daß eine oder mehrere ATM-Zellen z.B. durch einen Übertragungsfehler verloren gegangen ist. Beginnend mit dem zweiten Byte des 'Payload'-Bereiches erfolgt die Übermittlung der Nutzdateninformation. Dabei werden nacheinander die, den einzelnen Kanälen des TDM-Rahmens zugeordneten Nutzdaten-Bytes übermittelt. Direkt nach einer Übermittlung des letzten Bytes (das dem Kanal Nr. 31 zugeordnete Byte) eines TDM-Rahmens erfolgt eine Übermittlung des ersten Bytes (das dem Kanal Nr. 0 zugeordnete Byte) des TDM-Nachfolgerahmens. Der Zeiger zeigt dabei auf das erste Byte eines innerhalb des 'Payload'-Bereiches eines ATM-Zelle beginnenden TDM-Rahmens. Eine Darstellung dieser Struktur zeigt im übrigen auch Fig 1.

Eine Zuordnung der im 'Payload'-Bereich einer ATM-Zelle gespeicherten Bytes zu einem Kanal eines TDM-Rahmens erfolgt somit über die Position des Bytes im 'Payload'-Bereich der ATM-Zelle. Eine Übermittlung der Daten erfolgt unabhängig von der Belegung eines Kanals, wodurch die vorhandenen Netz-Resourcen mitunter unnötig belegt werden.

Hinzu kommt, daß die Füllzeit für eine ATM-Zelle 6 msec (125µs pro Byte) beträgt, wodurch aufgrund der Übertragungsverzögerung - in der Literatur häufig mit 'Delay' bezeichnet - Echoprobleme im Netz auftreten können. Dieser Effekt verstärkt sich durch die Verwendung von Kompressionsalgorithmen, wie sie beispielsweise im Rahmen des Mobilfunks verwendet werden. Bei einer Kompression von 1:10 beträgt die Füllzeit für eine ATM-Zelle somit 60 msec, wodurch die Echoprobleme noch weiter verstärkt werden.

Bei einer Verwendung von Kompressionsalgorithmen, welche durch Entfernen redundanter Informationssequenzen die zu übermittelnde Information unverändert lassen, entsteht aus dem kontinuierlichen Datenstrom in Abhängigkeit von der vorhandenen Redundanz ein variabler Datenstrom. Dies führt bei einer Datenübermittlung mit einer konstanten Übertragungsrate - wie beispielsweise bei einer paketorientierten Datenübermittlung gemäß ATM-Anpassungs-Schicht AAL-Typ 1 - zu Problemen, weshalb bevorzugt Kompressionsalgorithmen verwendet werden, die z.B. auf Basis von statistischen Vorhersagen einen kontinuierlichen Datenstrom erzeugen. Derzeit bekannte Kom-pressionsalgorithmen können in bestimmten Situationen jedoch zu einer Verfälschung der zu übermittelnden Information führen, so daß diese Kompressionsalgorithmen zwar für eine Übermittlung von Sprache verwendet werden können, für eine Über-mittlung von Faksimile oder Daten aber ungeeignet sind.

Ein wesentlicher Vorteil der vorliegenden Erfindung besteht nun darin, daß nur Substruktur-Elemente über das ATM-Netz übermittelt werden, deren zugeordneten Kanäle aktuell belegt sind. Dies führt zu einer verbesserten Ausnutzung der vorhandenen Netz-Resourcen.

Ein weiterer Vorteil der Erfindung besteht darin, daß durch. die Übermittlung einer individuell einstellbaren Anzahl von einer Endgeräteverbindung zugeordneten Nutzdaten-Bytes in einem Substruktur-Element eines Datenpakets eine Datenübermittlung mit einer variablen Übertragungsrate realisierbar ist. Dies ermöglicht die Verwendung von Kompressionsalgorithmen, die aus einem kontinuierlichen Datenstrom in Abhängigkeit von der in den zu übermittelnden Daten vorhandenen Redundanz einen variablen Datenstrom ohne Verfälschung der Information erzeugen.

Vorteilhafte Weiterbildungen der Erfindung sind in den Unteransprüchen angegeben.

Durch die Definition des ersten Nutzdaten-Segments einer ATM-Zelle als Zeiger, der die Anfangsadresse eines ersten im 'Payload'-Bereich der ATM-Zelle befindlichen Substruktur-Elements bezeichnet ist eine Synchronisierung der Kommunikationssysteme bei einem Verlust einer oder mehrerer ATM-Zellen auf einfache Weise realisierbar. Ein Ausführungsbeispiel der Erfindung wird im folgenden anhand der Zeichnung näher erläutert.

Dabei zeigen:
- Fig 1:: ein Strukturbild zur schematischen Darstellung des Datenformats gemäß TDM-Verfahren und des entsprechenden ATM-Datenformats gemäß ATM-Anpassungs-Schicht AAL-Typ1;
- Fig 2:: ein Strukturbild zur schematischen Darstellung des entsprechenden ATM-Datenformats und des Datenformats eines Substruktur-Elements gemäß ATM-Anpassungs-Schicht AAL-Typ2;
- Fig 3:: ein Strukturbild zur schematischen Darstellung des entsprechenden ATM-Datenformats gemäß ATM-Anpassungs-Schicht AAL-Typ5.

Fig 1 zeigt eine schematische Darstellung von zwei TDM-Rahmen R1, R2 und von zwei entsprechenden ATM-Zellen ATM-Z1, ATM-Z2 gemäß der ATM-Anpassungs-Schicht AAL-Typ1. Ein TDM-Rahmen R1, R2 umfaßt 32 Kanäle über welche eine Datenübermittlung im Rahmen von 30 Endgeräteverbindungen - wobei eine Zuordnung von 30 Kanälen für eine Übermittlung von Nutzdateninformation und von 2 Kanälen für eine Übermittlung von Signalisierungsinformation besteht - möglich ist. Bei einer Umwandlung eines kontinuierlichen, auf dem TDM-Verfahren basierenden Datenstroms auf das ATM-Format gemäß der ATM-Anpassungs-Schicht AAL-Typ1 werden alle 32 in einem TDM-Rahmen zeitlich aufeinanderfolgenden Kanäle - mit jeweils 1 Byte Nutzdateninformation - in der folgenden Weise auf das ATM-Zellen-Format umgesetzt:

Zusätzlich zum Zellkopf H der ATM-Zelle ATM-Z1, ATM-Z2 wird innerhalb des 'Payload'-Bereiches - im weiteren mit Nutzda-tenbereich bezeichnet - das erste Byte als Zeiger Z defi-niert. Dieser Zeiger Z zeigt auf das erste Byte eines innerhalb des Nutzdatenbereiches eines ATM-Zelle ATM-Z1, ATM-Z2 beginnenden TDM-Rahmens R1, R2. Mittels dieses Zeigers Z ist eine Wiederherstellung der Synchronisation zwischen Sender und Empfänger für den Fall, daß eine oder mehrere ATM-Zellen ATM-Z1, ATM-Z2 z.B. durch einen Übertragungsfehler verloren gegangen sind möglich. Beginnend mit dem zweiten Byte des Nutzdatenbereiches einer ATM-Zelle ATM-Z1, ATM-Z2 erfolgt die Übermittlung der in einem TDM-Rahmen R1, R2 enthaltenen Nutzdateninformation. Dabei werden nacheinander die, den einzel-nen Kanälen des TDM-Rahmens R1, R2 zugeordneten Nutzdaten-Bytes der Reihenfolge nach übermittelt. Direkt nach einer Übermittlung des letzten Bytes (das dem Kanal 31 zugeordnete Byte) eines TDM-Rahmens R1 erfolgt eine Übermittlung des ersten Bytes (das dem Kanal 0 zugeordnete Byte) des TDM-Nachfolgerahmens R2. Eine Zuordnung der Nutzdaten-Bytes einer ATM-Zelle ATM-Z1, ATM-Z2 zu einem Kanal eines TDM-Rahmens R1, R2 erfolgt somit über die Position des Bytes im Nutzdatenbereich der ATM-Zelle ATM-Z1, ATM-Z2.

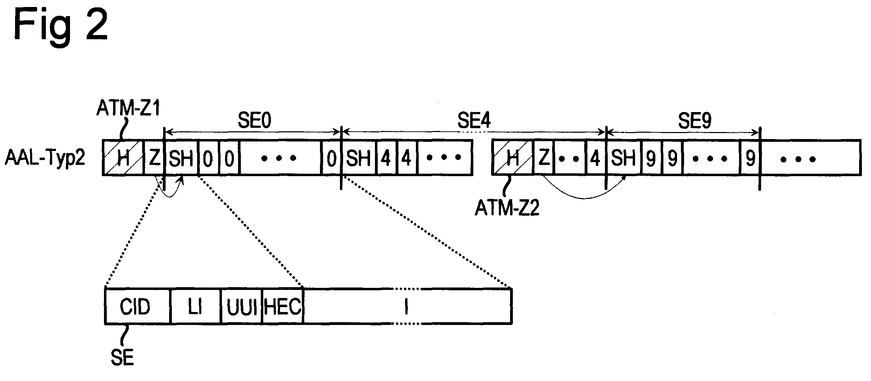

Fig 2 zeigt eine schematische Darstellung von zwei ATM-Zellen ATM-Z1, ATM-Z2 und eines Substruktur-Elements SE gemäß der ATM-Anpassungs-Schicht AAL-Typ2. Im Rahmen der ATM-Anpassungs-Schicht AAL-Typ2 besteht die Möglichkeit den Nutzdatenbereich einer ATM-Zelle ATM-Z1, ATM-Z2 in Substruktur-Ele-mente SE zu untergliedern. Ein Substruktur-Element SE gemäß der ATM-Anpassungs-Schicht AAL-Typ2 setzt sich aus einem 3 Bytes langem Zellkopf SH und einem Nutzdatenbereich I variabler Länge (0 bis 64 Byte) zusammen. Der Zellkopf eines Substruktur-Elementes SE gemäß der ATM-Anpassungs-Schicht AAL-Typ2 untergliedert sich in eine 8 Bit lange Kanal-Identifizierung CID (Channel Identifier), eine 6 Bit lange Längen-Identifizierung LI (Length Indicator), eine 5 Bit lange Sender-Empfänger-Identifizierung UUI (User-to-User Indication) und eine 5 bit lange Zellkopf-Kontrollsumme HEC (Header Error Control).

Entsprechend einer ATM-Zelle ATM-Z1, ATM-Z2 gemäß der ATM-Anpassungs-Schicht AAL-Typ1 wird im Nutzdatenbereich einer ATM-Zelle ATM-Z1, ATM-Z2 das erste Byte als Zeiger Z definiert. Dieser Zeiger Z gibt die Anfangsadresse des ersten Substruktur-Elements SE an, dessen Zellkopf SH im Nutzdatenbereich der ATM-Zelle ATM-Z1, ATM-Z2 liegt. Mittels dieses Zeigers Z ist eine Wiederherstellung der Synchronisation zwi-schen Sender und Empfänger für den Fall, daß eine oder mehrere ATM-Zellen ATM-Z1, ATM-Z2 z.B. durch einen Übertragungsfehler verloren gegangen sind möglich.

Durch die Untergliederung einer ATM-Zelle ATM-Z1, ATM-Z2 in Substruktur-Elemente SE können innerhalb einer ATM-Verbindung mittels der Kanal-Identifizierung CID mehrere Kanäle definiert werden, die alle mit der gleichen ATM-Adresse - beste-hend aus einem VPI (Virtual Path Identifer) und einem VCI (Virtual Channel Identifer) - angesprochen werden. Im Rahmen einer Vernetzung von Kommunikationssystemen besteht somit die Möglichkeit ein Substruktur-Element SE für eine Übermittlung von Signalisierungsinformation, d.h. für eine Übermittlung von D-Kanal-Daten zu definieren. Für eine Übermittlung von Nutzdateninformation, d.h. für eine Übermittlung von B-Kanal-Daten, kann für jeden benötigten B-Kanal ein weiteren Sub-struktur-Element SE definiert werden, so daß die Übertragungskapazität exakt an den aktuellen Bedarf angepaßt werden kann. In der Figur sind beispielsweise nur Substruktur-Elemente SE0, SE4 und SE9 für die Kanäle 0, 4 und 9 definiert, d.h. daß zwischen den Kommunikationssystemen nur über 3 bestehende Endgeräteverbindungen aktuell Daten übermittelt werden. Im Gegensatz zu einer ATM-Zelle ATM-Z1, ATM-Z2 gemäß der ATM-Anpassungs-Schicht AAL-Typ1 erfolgt bei einer ATM-Zelle ATM-Z1, ATM-Z2 gemäß der ATM-Anpassungs-Schicht AAL-Typ2 eine Zuordnung eines Nutzdaten-Bytes zu einem Kanal eines TDM-Rahmens R1, R2 nicht über die Position des Nutzdaten-Bytes im Nutzdatenbereich der ATM-Zelle ATM-Z1, ATM-Z2, sondern über die Kanal-Identifizierung CID.

Durch die 6 Bit lange Längen-Identifizierung LI im Zellkopf eines Substruktur-Elements SE kann ein Nutzdatenfeld I variabler Länge (0 bis 2⁶ Byte) definiert werden. Die damit verbundene Möglichkeit eine Datenübermittlung mit variabler Übertragungskapazität zu realisieren, erlaubt die Verwendung von Kompressionsalgorithmen, die aufgrund eines Entfernens von redundanter Information aus einem konstanten Datenstrom einen variablen Datenstrom generieren.

Bei einer Umwandlung eines kontinuierlichen, auf dem TDM-Verfahren basierenden Datenstrom auf das ATM-Datenformat gemäß ATM-Anpassungs-Schicht AAL-Typ2 wird für die Substruktur-Elemente SE ein Nutzdatenfeld I mit einer konstanter Länge von 8Byte verwendet. Ein Substruktur-Element SE gemäß ATM-Anpassungs-Schicht AAL-Typ2 ist somit 11 Byte - ein Zellkopf mit 3 Bytes Länge und 8 Byte Nutzdaten - lang. In diesem Fall beträgt der Zellüberhang - in der Literatur häufig mit 'Overhead' bezeichnet - eines Substruktur-Elementes SE gemäß ATM-Anpassungs-Schicht AAL-Typ2 mehr als 37% der Nutzlast. Um diesen Zellüberhang zu verringern kann eine Datenübertragung mit Hilfe der ATM-Anpassungs-Schicht AAL-Typ5 realisiert werden.

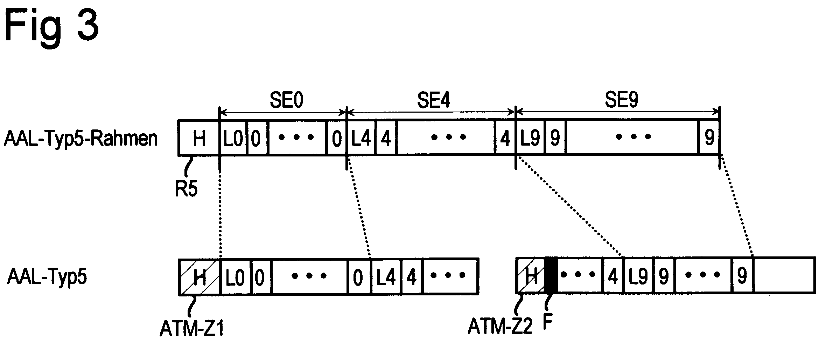

Fig 3 zeigt eine schematische Darstellung eines AAL-Typ5-Rahmens R5 und von zwei ATM-Zellen ATM-Z1, ATM-Z2 gemäß der ATM-Anpassungs-Schicht AAL-Typ5. Ein ALL-Typ5-Rahmen R5 besitzt eine Länge von 0 bis 2¹⁶ Bytes. Die in einem ALL-Typ5-Rahmen R5 enthaltene Information wird entsprechend der Länge des ALL-Typ5-Rahmens R5 auf eine oder mehrere ATM-Zellen ATM-Z1, ATM-Z2 aufgeteilt. Für eine Wiederherstellung der Synchronisation zwischen Sender und Empfänger für den Fall, daß eine oder mehrere ATM-Zellen ATM-Z1, ATM-Z2 z.B. durch einen Über-tragungsfehler verloren gegangen sind, werden die in einem AAL-Typ5-Rahmen R5 enthaltenen Daten derart auf eine oder mehrere ATM-Zellen ATM-Z1, ATM-Z2 aufgeteilt, daß das erste Byte des AAL-Typ5-Rahmens R5 dem ersten Byte des Nutzdatenbereichs einer ATM-Zelle ATM-Z1 zugeordnet wird. Durch eine Markierung F im Zellkopf der letzten einem AAL-Typ5-Rahmen R5 zugeordneten ATM-Zelle ATM-Z2 wird erkannt, daß die nächstfolgende ATM-Zelle, welche dieselbe ATM-Adresse - bestehend aus VPI und VCI - im Zellkopf H enthält, die erste, dem AAL-Typ5-Nachfolgerahmen zugeordnete ATM-Zelle ist.

Für eine Untergliederung eines AAL-Typ5-Rahmens R5 in Substruktur-Elemente SE werden substruktur-elementindividuelle Zeiger L (mit 1 Byte Länge) definiert, welche die Länge der einzelnen Substruktur-Elemente SE bezeichnen. Somit lassen sich Substruktur-Elemente SE bis zu einer Länge von 2⁸ = 256 Byte realisieren. Im Rahmen einer Vernetzung von Kommunikationssystemen besteht die Möglichkeit über eine separate Si-gnalisierung eine Zuordnung zwischen den Kanälen eines TDM-Rahmens und einzelnen Substruktur-Elementen SE, z.B. über die Länge eines Substruktur-Elements SE oder über die Reihenfolge der einzelnen Substruktur-Elemente SE zu definieren. In der Figur sind beispielsweise nur Substruktur-Elemente SE0, SE4 und SE9 für die Kanäle 0, 4 und 9 definiert, d.h. daß zwischen den Kommunikationssystemen nur über 3 bestehende Endgeräteverbindungen aktuell Daten übermittelt werden.

Bei einer Umwandlung des Datenformats gemäß TDM-Verfahren auf das ATM-Datenformat gemäß ATM-Anpassungs-Schicht AAL-Typ5 wird für die Substruktur-Elemente SE ein Nutzdatenfeld mit einer konstanter Länge von 8Byte verwendet. Ein Substruktur-Element SE gemäß ATM-Anpassungs-Schicht AAL-Typ5 ist somit 9 Bytes - ein Zeiger Z mit 1 Byte Länge und 8 Byte Nutzdaten - lang. In diesem Fall beträgt der Zellüberhang eines Substruktur-Elementes SE gemäß ATM-Anpassungs-Schicht AAL-Typ5 nur noch 12.5% der Nutzlast.

## Patentansprüche

1. Verfahren zur Verbindung von Kommunikationssystemen, die jeweils aus einer periodischen Folge von kanalindividuellen Informations-Segmenten gebildete Multiplexverbindungen vorsehen über eine paketorientierte Datenübertragungsstrecke, bei der für eine Datenübertragung in Substruktur-Elemente (SE) untergliederte Datenpakete (ATM-Z1, ATM-Z2) eingerichtet sind und Kanälen der Multiplexverbindung jeweils ein Substruktur-Element (SE) zuweisbar ist,
wobei in ein Substruktur-Element (SE) eine individuell einstellbare Anzahl von, nacheinander über den zugewiesenen Kanal eintreffenden Informations-Segmenten eingefügt werden, und eine Übermittlung von Substruktur-Elementen (SE) in Abhängigkeit von in diesen enthaltener Information unterbindbar ist.

2. Verfahren nach Anspruch 1,
**dadurch gekennzeichnet,**
daß in Fällen, in denen mehrere Kanäle gemeinsam zur Realisierung einer logischen Verbindung vorgesehen sind, eine individuell einstellbare Anzahl von, nacheinander über die zu der logischen Verbindung gehörenden Kanäle eintreffenden Informations-Segmenten in ein Substruktur-Element (SE) eingefügt werden.

3. Verfahren nach Anspruch 1 oder 2,
**dadurch gekennzeichnet,**
daß die Datenpakete (ATM-Z1, ATM-Z2) als ATM-Zellen strukturiert sind.

4. Verfahren nach Anspruch 2 oder 3,
**dadurch gekennzeichnet**,
daß die Substruktur-Elemente (SE) jeweils einen Zellkopf aufweisen,
in dem ein Kanalidentifikator (CID) zur Bezeichnung einer Zuordnung der Substruktur-Elemente (SE) zu dem oder den entsprechenden Kanälen gespeichert wird, und
in dem eine Längeninformation (LI) zur Angabe der Anzahl von in einem Substruktur-Element (SE) eingefügten Informations-Segmenten gespeichert wird.

5. Verfahren nach einem der vorhergehenden Ansprüche,
**dadurch gekennzeichnet**,
daß in ein Substruktur-Element (SE) ausschließlich Informations-Segmente von wenigstens einem Signalisierungskanal eingefügt werden.

6. Verfahren nach Anspruch 3,
**dadurch gekennzeichnet,**
daß in einem als erstes Nutzdaten-Segment einer ATM-Zelle (ATM-Z1, ATM-Z2) definierten Segment ein Zeiger (Z) definiert wird, mit dem die Anfangsadresse des ersten im Nutzdatenbereich der ATM-Zelle (ATM-Z1, ATM-Z2) befindlichen Substruktur-Elements (SE) bezeichnet wird.

7. Verfahren nach Anspruch 1 bis 3,
**dadurch gekennzeichnet,**
daß die Substruktur-Elemente (SE) jeweils einen als Zellkopf ausgebildeten substruktur-elementindividuellen Zeiger (L) aufweisen, und
daß durch den substruktur-elementindividuellen Zeiger (L) die Anzahl der in dem Substruktur-Element (SE) eingefügten Informations-Segmente bezeichnet wird.

8. Verfahren nach Anspruch 7,
**dadurch gekennzeichnet,**
daß über eine separate Signalisierungsverbindung eine Substruktur-Elemente (SE) zu einem oder mehreren Kanälen zuordnende Zuweisungsinformation übermittelt wird.

9. Verfahren nach Anspruch 8,
**dadurch gekennzeichnet,**
daß die Zuweisungsinformation anhand der Anzahl von in einem jeweiligen Substruktur-Element (SE) eingefügten Informations-Segmenten einen Kanal bezeichnet.

10. Verfahren nach Anspruch 8 oder 9,
**dadurch gekennzeichnet,**
daß die Zuweisungsinformation anhand der Reihenfolge der Substruktur-Element (SE) einen Kanal bezeichnet.
